# EUROPEAN PATENT APPLICATION

(11) **EP 4 016 132 A1**
(43) Date of publication of application: **22.06.2022**
(21) Application number: 21190914.8
(22) Date of filing: 11.08.2021
(51) Int. Cl.: G01S 19/21, H04K 3/00

(54) **SYSTEMS AND METHODS FOR COLLECTING, PROCESSING, AND PROVIDING GEOGRAPHIC INFORMATION ABOUT INTERFERENCE WITH A GLOBAL NAVIGATION SATELLITE SYSTEM**

(30) Priority: 28.08.2020 US 202063071974 P; 17.02.2021 US 202117177437
(71) Applicant: Honeywell International Inc., Charlotte, NC 28202 (US)
(72) Inventor: MCDONALD, James Arthur, Charlotte, 28202 (US); SUPINO, Ryan, Charlotte, 28202 (US); GORSKY, John-Paul, Charlotte, 28202 (US)
(74) Representative: Haseltine Lake Kempner LLP

(57) **Abstract**

System and methods are described that illustrate how to collect and store data about geographic regions of jamming and/or spoofing of signal(s) emitted from satellite(s) of a global navigation satellite system (GNSS). An entity (101a, 101b) is configured to, and to communicate whether the jamming and/or spoofing has been detected, and the corresponding geographic location and the corresponding detection time. A processing system (104) is configured to receive data about detected jamming and/or spoofing, and a corresponding geographic location and a detection time of such jamming and/or spoofing. Entities(s) (113) may receive information about jamming and/or spoofing from the processing system. The received information may be used to alert the entities to dynamically changing jamming and/or spoofing. The received information may be further used so alert other entities to dynamically changing jamming and/or spoofing.

## Description

### CROSS-REFERENCE TO RELATED APPLICATIONS

The present application claims benefit of U.S. Patent Application Serial No. 63/071,974 filed August 28, 2020; the entire contents of the aforementioned patent application is incorporated herein by reference as if set forth in its entirety.

### BACKGROUND

Individuals and entities (including nation states) jam and/or spoof a global navigation satellite system (GNSS) signals to interfere with a vehicle's ability to accurately determine their position and/or velocity, and to navigate with a navigation system using data from GNSS receiver(s). Jamming (or radio interference) causes signal loss from satellites of the GNSS in a geographic region proximate to the jammer. Thus, a GNSS receiver is unable to determine kinematic states of the GNSS receiver (e.g., and the vehicle carrying the GNSS receiver). Spoofing is a form of radio interference which causes the GNSS receiver to determine false kinematic states (e.g., position) of the GNSS receiver (e.g., the vehicle carrying the GNSS receiver). Thus, for example, if a vehicle mounting a GNSS receiver cannot accurately determine its position, it is at risk of damage or loss of the vehicle, vehicle crew, vehicle passengers, and/or vehicle cargo.

### SUMMARY

A method is provided. The method comprises: receiving data indicating (a) at least one of detected jamming and detected spoofing and (b) a corresponding geographic location and time of the at least one of detected jamming and detected spoofing; determining data describing a corresponding geographic region of the at least one of the detected jamming and the detected spoofing using the received data; and storing the determined data describing the corresponding geographic region, the corresponding time, and the data indicating at least one of detected jamming and detected spoofing.

A program product is provided. The program product comprises a non-transitory processor readable medium on which program instructions are embodied, wherein the program instructions are configured, when executed by at least one programmable processor, to cause the at least one programmable processor to: receive data indicating (a) at least one of detected jamming and detected spoofing and (b) a corresponding geographic location and time of the at least one of detected jamming and detected spoofing; determine data describing a corresponding geographic region of the at least one of the detected jamming and the detected spoofing using the received data; and store the determined data describing the corresponding geographic region, the corresponding time, and the data indicating at least one of detected jamming and detected spoofing.

A system is provided. The system comprises: a communications circuitry; and processing circuitry, communicatively coupled to the communications circuitry, and configured to: receive data indicating (a) at least one of detected jamming and detected spoofing and (b) a corresponding geographic location and time of the at least one of detected jamming and detected spoofing; determine data describing a corresponding geographic region of the at least one of the detected jamming and the detected spoofing using the received data; and store the determined data describing the corresponding geographic region, the corresponding time, and the data indicating at least one of detected jamming and detected spoofing.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates a diagram of aircraft in a geographic region of jamming and/or spoofing collecting and providing information indicating geographic region(s) of jamming and/or spoofing;
Figure 2 illustrates a block diagram of one embodiment of an aircraft including a modified navigation system;
Figure 3 illustrates a flow diagram of one embodiment of a method of identifying geographic region(s) of jamming and/or spoofing; and
Figure 4 illustrates a plan view of an exemplary embodiment of a a geographic map illustrating at least one of geographic region of spoofing and/or at least one geographic region of.

In accordance with common practice, the various described features are not drawn to scale but are drawn to emphasize specific features relevant to the subject matter described. Reference characters denote like elements throughout Figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and electrical changes may be made. Furthermore, the method presented in the drawing figures and the specification is not to be construed as limiting the order in which the individual steps may be performed. The following detailed description is, therefore, not to be taken in a limiting sense. Also, it will be understood that when a device or signal is referred to as being "coupled" to an element, it can be coupled directly to the element, or intervening elements may also be present.

To avoid potential harm arising from traveling through geographic regions of jamming and/or spoofing, entities and/or operations centers can be provided, by a processing system, information indicating geographic region(s) of jamming and/or spoofing that is updated over time. Entities include without limitation vehicles and living beings (e.g., human beings and animals). Typically, such entities may be moving or may not be moving, i.e., be fixed in a location.

An operations center plans and/or directs travel routes of entities, and/or provides information for planning and/or directing travel routes; operations centers include without limitation traffic control (e.g., air traffic control) center(s), vehicle operator operations (e.g., airline, aircraft, unmanned aircraft system (UAS), military, ship, spaceship, trucking, and/or any other type of vehicle operations) centers, and/or third party organizations. An operations center may be referred to also as a dispatch center. Information indicating geographic region(s) of jamming and/or spoofing may be collected from one or more entities travelling through such geographic region(s) of jamming and/or spoofing, and provided to the processing system. Optionally, alternatively or additionally, the information indicating geographic region(s) of jamming and/or spoofing may be solely or additionally collected from at least one entity having a fixed geographic location, e.g., a GNSS spoofing and/or jamming detection system at a fixed location; the GNSS spoofing and/or jamming detection system at a fixed location may be located on the ground or may be above the ground, e.g., airborne.

A vehicle may be an airborne vehicle (e.g., an aircraft, a helicopter, an UAS, a balloon, or any other airborne vehicle), a spacecraft, a terrestrial vehicle (e.g., an automobile, a truck, a tank, or any other terrestrial vehicle), a water borne vehicle (e.g., a ship, a submarine, or any other type of waterborne vehicle), or any other type of vehicle. Optionally, at least one type of vehicle, e.g., an aircraft, can be used to provide information indicating geographic region(s) of jamming and/or spoofing1, whilst such information can be used by at least one other type of vehicle, e.g., a ship. For example, about one thousand aircraft may be airborne above the Earth at any given time. Many of these aircraft include sensors configured to detect jamming and/or spoofing, and thus may be used to provide information indicating geographic region(s) of jamming and/or spoofing. A vehicle used to determine spoofing and/or jamming may be travelling between an origin geographic location and a destination geographic location, or may remain at a substantially fixed geographic location, e.g., such as with a balloon or a UAS. For pedagogical purposes, an entity collecting or utilizing information about geographic region(s) of jamming and/or spoofing are illustrated herein as a vehicle or more specifically as an aircraft; however, embodiments of the invention generally apply to other entities. ¹ For purposes of clarity, at least one terrestrial GNSS spoofing and/or jamming detection system at a fixed location may be used to detect jamming and/or spoofing in addition to and/or in lieu of at least one moving entity, *e.g.,* at least living entity and/or at least one vehicle, used to detect jamming and/or spoofing.

Processing systems described herein may also be referred to as processing circuitry. Each processing system may be implemented as a neural network, quantum computer, and/or a state machine. Optionally, a state machine may comprise processor circuitry coupled to memory circuitry.

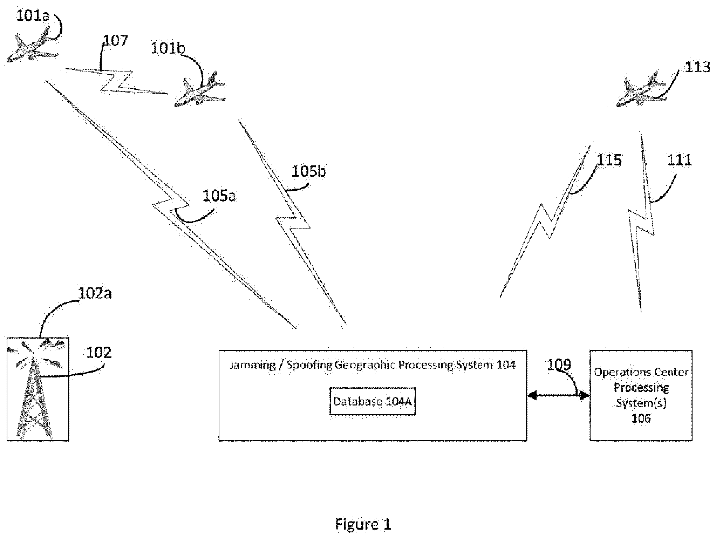

Figure 1 illustrates a diagram of aircraft in a geographic region of jamming and/or spoofing collecting and providing information indicating geographic region(s) of jamming and/or spoofing. Providing may also be referred to herein as transmitting or sending. Figure 1 illustrates aircraft 101a, 101b, a jamming and/or spoofing transmitter 102, a jamming and/or spoofing processing system (jamming / spoofing processing system) 104, and at least one operations center processing system (operations center processing system(s)) 106. Each operations center processing system may be operated and/or used by and/or be part of a vehicle operations center. The jamming and/or spoofing transmitter 102 is configured to transmit jamming and/or spoofing signal(s) 102a. Each aircraft 101a, 101b includes a modified navigation system (or modified navigation circuitry) configured to detect jamming and/or spoofing, and to transmit a signal indicating jamming and/or spoofing and a geographic location and/or detection time of detected jamming and/or spoofing. When receiving detection time of detected jamming and/or spoofing (or lack of jamming and/or spoofing), a dynamic database, and hence a dynamic geographic map, of jamming and spoofing can be generated. Thus, when a first aircraft detects jamming and/or spoofing at a location, the database and corresponding geographic map(s) will indicate jamming and/or spoofing at the location. If a second aircraft later detects no jamming and/or no spoofing the same location, the database and corresponding geographic maps can be correspondingly updated to reflect dynamic changes in jamming and spoofing. Optionally, not every aircraft flying through and/or outside of a geographic region of jamming and/or spoofing includes the modified navigation system.

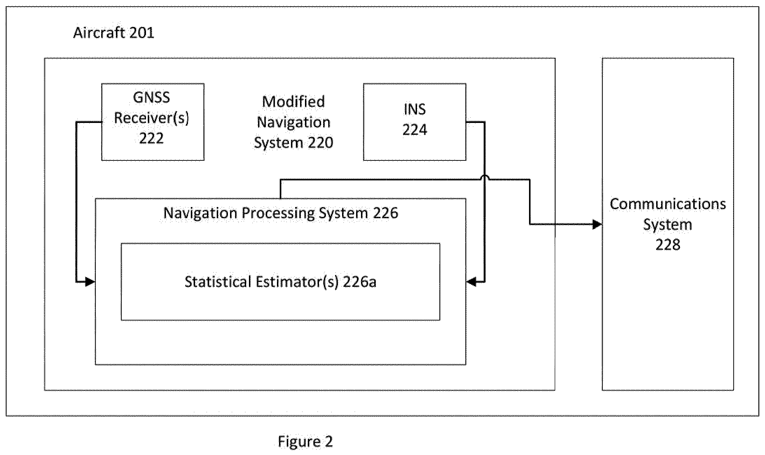

Figure 2 illustrates a block diagram of one embodiment of an aircraft 201 including the modified navigation system 220. The modified navigation system 220 is configured to be communicatively coupled to a communications system 228.

The modified navigation system 220 includes at least one GNSS receiver (GNSS receiver(s)) 222, an inertial navigation system (INS) 224, and a navigation processing system 226 (which can be part of another processing system in the aircraft 201). Alternatively, an inertial measurement unit (IMU) may be used in lieu of the INS 224. The INS 224 and each of the GNSS receiver(s) 222 are communicatively coupled to the navigation processing system 226. The navigation processing system 226 is communicatively coupled to the communications system 228.

The INS 224 comprises at least one inertial measurement unit (IMU(s)); each IMU comprises accelerometer(s) and gyroscope(s) utilized to determine acceleration along and rate of rotation around one or more axes. Each GNSS receiver may be a Global Positioning System (GPS) receiver, a GLObal NAvigation Satellite System receiver, a BeiDou Navigation satellite system (BDS) receiver, a Galileo receiver, an Indian Regional Navigation Satellite System (IRNSS) receiver, or a receiver for another type of satellite navigation system.

The navigation processing system 226 further comprises a statistical estimator(s) 226a for example a Bayesian filter(s), e.g., Kalman filter(s). The statistical estimator(s) 226a utilize kinematic data from the INS 224 and the GNSS receiver(s) 222 to more accurately determine a kinematic state of the aircraft 201, and to reduce errors associated with the INS 224.

Kinematic state means a state describing position, velocity, and/or angular orientation. The determined one or more kinematic states of a vehicle include vehicle position, vehicle attitude, vehicle heading, and/or vehicle velocity. Vehicle position means vehicle altitude and vehicle horizontal position. Vehicle attitude means vehicle roll and vehicle pitch angles.

One embodiment for detecting jamming of GNSS signals is subsequently described; other techniques may be used in the alternative. A GNSS receiver can detect jamming of GNSS signals when it is unable to detect signals from satellites of the corresponding GNSS. In other embodiments, some but not all GNSS signals may be detected in the presence of jamming; if spoofing is also employed contemporaneously with jamming, then spoofing may also be detected, e.g., by the navigation processing system 226. Upon detecting GNSS jamming, the GNSS receiver(s) 222 sends to the navigation processing system 226, a corresponding signal indicating that it is unable to detect such signals, e.g., that the GNSS receiver can track zero satellites of the corresponding GNSS. Although such satellite signals may be blocked if an aircraft including the GNSS receiver(s) 222 is near a physical obstruction, e.g., is parked in a hanger, when airborne aircraft would not suffer such physical obstructions.

Embodiments for detecting spoofing of GNSS signals are subsequently described; other techniques may be used in the alternative. The statistical estimator(s) 226a can determine spoofing of GNSS signals using different techniques including chi-squared test, monitoring direct INS/GPS variation, and/or integrity monitoring. Chi-squared testing includes evaluating the difference between estimated and expected satellite pseudo-range measurements and comparing this difference against a pre-computed statistical threshold; this can be accomplished via monitoring of the residuals or innovations computed as part of a Kalman Filter measurement update. Direct INS/GPS monitoring can be performed by evaluating whether GNSS receiver position, velocity, and/or time (PVT) data changes between time epochs exceeds a first threshold level and/or evaluating whether a difference between GNSS receiver PVT data and INS PVT data during a time epoch exceeds a second threshold level. Integrity monitoring is described in U.S. Patent Publication No. 20180283871 which is incorporated by reference herein in its entirety.

Optionally, upon detecting GNSS jamming and/or spoofing, the navigation processing system 226, and the statistical estimator(s) 226a, is configured to cease using GNSS data to determine the kinematic state of the aircraft 201 and rely solely on kinematic state information from the INS 224. Because the errors of the INS are small, the accuracy of the kinematic state information from the INS 224 is initially highly accurate. Further, upon detecting GNSS jamming or spoofing, the navigation processing system 226 is configured to cause the communications system to send, e.g., wirelessly2, a jamming and/or spoofing signal indicating GNSS jamming and/or GNSS spoofing (depending upon which is detected) to the jamming / spoofing geographic processing system 104. Such a signal may be sent once or periodically. If sent periodically, the signal stops once the corresponding jamming or spoofing is no longer detected by the corresponding aircraft 201. Also, optionally, upon detecting jamming or spoofing, a GNSS receiver is configured to measure the received power level(s) of the detected jamming and/or spoofing signal(s).3
² Optionally, the communications system 228 may wirelessly communicate the jamming and/or spoofing signal to the jamming / spoofing geographic processing system 104 directly or indirectly, e.g., through at least one terrestrial radio ground station and/or at least one satellite.
³ In one embodiment, each GNSS spoofing and/or jamming detection system at a fixed location may be implemented as subsequently described. Each GNSS spoofing and/or jamming detection system at a fixed location comprises a modified spoofing and/or jamming detection system comprising at least one GNSS receiver, a jamming and/or spoofing detection processing system, and a communications system. Because it is at a fixed location which is known and stored, *e.g.,* in the jamming and/or spoofing detection processing system, each GNSS spoofing and/or jamming detection system at a fixed location can detect spoofing it the at least one GNSS receiver determines that the location of the GNSS spoofing and/or jamming detection system at a fixed location has changed from the stored location, *e.g.,* by a threshold distance. Further, each GNSS spoofing and/or jamming detection system at a fixed location is configured to detect jamming in a manner described elsewhere herein. The communications system may communicate, *e.g.,* wirelessly and/or by wired means, directly or indirectly with the jamming / spoofing geographic processing system 104. Wired means includes without limitation through a wide area network such as for example the Internet.

Returning to Figure 1, jamming and/or spoofing indication signal(s) are wirelessly sent through first communications links 105a, 105b from the respective aircraft 101a, 101b to the jamming / spoofing geographic processing system 104. A jamming or spoofing indication signal comprises jamming or spoofing indication data.

A jamming or spoofing indication signal comprises indication data indicating either jamming or spoofing, and a corresponding two or three dimensional geographic location corresponding to where the corresponding jamming or spoofing was detected by an aircraft. Optionally, the jamming or spoofing indication data includes the power level of the corresponding jamming or spoofing signal(s).

Optionally, the jamming / spoofing geographic processing system 104 includes receiver system(s) to receive such jamming or spoofing indication signals directly from the respective aircraft 101a, 101b. Alternatively, the first communications links 105a, 105b include a ground communications network and a wired and/or wireless communications network. Thus, the jamming or spoofing indication signals are sent wirelessly from the respective aircraft 101a, 101b to the ground communications network; the ground communications network then sends the jamming or spoofing indication signals through the wired and/or wireless communications network to the jamming / spoofing geographic processing system 104. Optionally, the ground communications network includes the Aeronautical Radio, Incorporated (ARINC) terrestrial communications network and/or the SITA terrestrial communications network. Optionally, the wired and/or wireless communications network comprises the Internet. Optionally, the wireless signals described herein may be sent in the high frequency, very high frequency, microwave, and/or millimeter-wave spectra.

Further, alternatively, the first communications links 105a, 105b include a satellite communications network and a wired and/or wireless communications network. Thus, the jamming or spoofing indication signals are sent wirelessly from the respective aircraft 101a, 101b to the satellite communications network; the satellite communications network then sends the jamming or spoofing indication signals through the wired and/or wireless communications network to the jamming / spoofing geographic processing system 104. Optionally, the satellite communications network includes an Intelsat communications network.

Further, optionally, an aircraft 101a may wirelessly send (to the jamming / spoofing geographic processing system 104) jamming or spoofing indication signals through one or more relaying aircraft 101b, e.g., using second communications link(s) 107. The relaying aircraft 101b may send the jamming or spoofing indication signals to the jamming /spoofing geographic processing system 104 using a first communications link 105b.

The jamming / spoofing geographic processing system 104 may include the database 104A of received location(s) where and when jamming has been detected (and optionally detected power level(s) of corresponding jamming signal(s)), received location(s) where spoofing has been detected (and optionally detected power level(s) of corresponding spoofing signal(s)), two and/or three dimensional region(s) identifying geographic region(s) of detected jamming and/or spoofing, and/or optionally a location and azimuth direction of travel of the aircraft detecting the jamming and/or spoofing. However, the database 104A may be located elsewhere, e.g., in the modified navigation system 220, the aircraft 201, or even in a system that is not in the aircraft. The location and azimuth direction of travel of the aircraft detecting the jamming and/or spoofing, optionally in combination with other sources of information, may be used to determine location(s) of source of jamming and/or spoofing. The jamming / spoofing geographic processing system 104 is configured to generate parameters (e.g., boundaries) defining the two and/or three dimensional region(s) identifying geographic regions of jamming and/or spoofing using the received location(s) where jamming has been detected and the received location(s) where spoofing has been detected, and optionally the detected power level(s) of corresponding jamming signal(s) and spoofing signal(s). Optionally, the data, e.g., describing the two and/or three dimensional region(s) identifying geographic regions of jamming and/or spoofing, are stored in the database 104A in a geographic information system (GIS) format.

Optionally, at least one processing system of at least one operations center processing system(s) 106 are configured to be coupled through a third communications link 109. Optionally, the third communications link 109 includes the Internet. Optionally, the operators one or more of the operation processing system(s) 106 subscribe to receive data about the two and/or three dimensional region(s) identifying regions of jamming and/or spoofing from the operator of the jamming / spoofing geographic processing system 104. Such data identifies two or three dimensional regions where jamming and/or spoofing is expected, and whether jamming and/or spoofing is detected in each region. An operator of an operation processing system may utilize the data about or describing two and/or three dimensional region(s) identifying geographic regions of jamming and/or spoofing to warn aircraft, e.g., owned and/or controlled by the operator, of such geographic region(s) of spoofing and/or jamming, and optionally to direct the aircraft away from such geographic region(s) of spoofing and/or jamming. Optionally, an operations center processing system may communicate such information to another aircraft 113 by a fourth communications link 111. The fourth communications link 111 may include the ground communications network or the satellite communications network, and optionally the wired and/or wireless communications network described herein. The other aircraft 113 may or may not be in a geographic region of jamming or spoofing. Optionally, the jamming / spoofing geographic processing system 104 may be configured to provide data to processing systems of one or more entities other than those expressly described herein.

Optionally, the other aircraft 113 may directly receive data about the two and/or three dimensional region(s) identifying geographic region(s) of jamming and/or spoofing from the jamming / spoofing geographic processing system 104. The jamming / spoofing geographic processing system 104 may communicate with the other aircraft 113 utilizing a fifth communications link 115. The fifth communications link 115 may include the ground communications network or the satellite communications network, and optionally the wired and/or wireless communications network described herein.

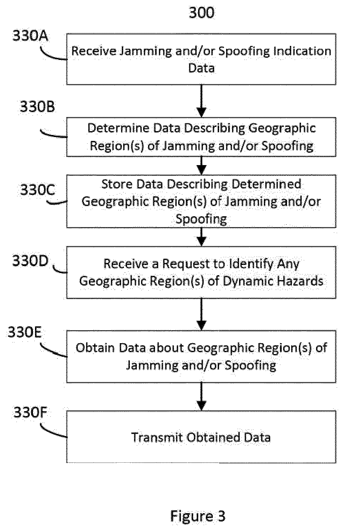

Figure 3 illustrates a flow diagram of one embodiment of a method 300 of identifying geographic region(s) of jamming and/or spoofing. To the extent the method 300 shown in Figure 3 is described herein as being implemented in the systems shown in Figure 1, it is to be understood that other embodiments can be implemented in other ways. The blocks of the flow diagrams illustrated herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 330A, receive jamming and/or spoofing indication data. Optionally, the jamming and/or spoofing indication may be received from the at least one vehicle and/or the at least one GNSS spoofing and/or jamming detection system at a fixed location. The jamming and/or spoofing indication data comprises an indication of jamming or spoofing, a corresponding two or three dimensional geographic location corresponding to where the jamming or the spoofing was detected, e.g., by the vehicle and/or the at least one GNSS spoofing and/or jamming detection system at a fixed location, and optionally, power level(s) of detected jamming and/or spoofing signal(s). Optionally, the vehicle and/or the at least one GNSS spoofing and/or jamming detection system at a fixed location may transmit a signal periodically indicating detection of jamming or spoofing, or no detection of jamming and/or spoofing, at a geographic location and the corresponding detection time; this optional, periodic transmitted signal would be received in block 330A.

In block 330B, determine data describing geographic region(s) of jamming and/or spoofing using at least some of the received indication data. Such geographic region(s) can be in two (e.g., lateral position) or three dimensions. Optionally, for each geographic location where jamming and/or spoofing is detected by a vehicle and/or at least one GNSS spoofing and/or jamming detection system at a fixed location, data describing a two or three dimensional region (e.g., area or volume) is determined, e.g., where the region is centered, about the geographic location to define the region of jamming or spoofing.

Optionally, the data may describe the boundaries of the two or three dimensional region. The two dimensional volume may be an ellipse, a circle, or a polygon (e.g., a square). The three dimensional volume may be an ellipsoid, a sphere, or a polyhedron, e.g., a cube. The dimension(s), e.g., side length or radius, may be user defined. Optionally, a geographic region is determined only if two different (a) at least one vehicle and/or at least one GNSS spoofing and/or jamming detection system at a fixed location detect the same type of jamming or spoofing and have an overlapping region.

Optionally, the geographic region(s) of jamming and/or spoofing may change over time. Thus, jamming and/or spoofing may be determined at a geographic location at one period of time, but not a later period of time.

Optionally, if the spoofing indication data includes power level of each detected jamming and/or spoofing signal, then three or more power levels determined at different locations (by one or more vehicles and/or at least one GNSS spoofing and/or jamming detection system at a fixed location) may be used to determine the location of the corresponding jamming or spoofing source using the intersection of circles e.g., defined by a free space propagation model, whose edge defines possible locations of the source. As long as at least three of the locations are sufficiently spaced apart, the intersection of the circles identifies the source of the jamming or spoofing.

In block 330C, store the determined data describing geographic region(s) of jamming and/or spoofing, e.g., in the database 104A. Because geographic regions of jamming and/or spoofing may vary with time, the stored geographic regions of jamming and/or spoofing may also vary with time. Thus, the stored data may reflect that a geographic region may be determined to have jamming or spoofing at one period of time, but not at a later period of time. Optionally, the stored data may be stored in a format, e.g., using a GIS format, configured to be illustrated on a geographic map.

Optionally, in block 330D, receive a request to identify any geographic region(s) of jamming and/or spoofing in a specified geographic region or including a geographic location. Optionally, the request may be made through an application programming interface (API) of software executing on the jamming / spoofing geographic processing system 104. Optionally, the request may be made to an Internet protocol (IP) address or a uniform resource locator (URL) associated with the jamming / spoofing geographic processing system 104. Optionally, the received request specifies a geographic region such as a two dimensional area or a three dimensional volume in which such geographic region(s) of jamming and/or spoofing are to be identified. Optionally, and alternatively, the received request specifies a geographic location at which a geographic region of jamming or spoofing is to be identified. Optionally, no request may be received, and blocks 330E and 330F may be performed without a request.

Optionally, in block 330E, obtain data, e.g., from the database 104A, about any geographic region(s) where jamming and/or spoofing have been detected and any geographic region(s) where jamming and/or spoofing are no longer detected. Optionally, obtain data about changes regarding jamming and/or spoofing in any geographic region(s); thus, data may only be provided about geographic region(s) where jamming and/or spoofing is initially detected, and geographic regions where jamming and/or spoofing is no longer detected. This later technique may be used to update entities about changes after initially provisioning the entities with data about geographic region(s) of jamming and/or spoofing.

Optionally, obtained data, e.g., for other entities such as optionally an entity requesting the obtained data. The geographic region(s) are identified by obtaining data describing such geographic region(s).

Block 330E may be response in to block 330D, in response to a query for any changes to jamming and/or spoofing, or provided periodically without a receipt of a request for the obtained data. This may be done using conventional GIS techniques, e.g., searching for geographic region(s) of spoofing and/or jamming defined to be within the specified geographic region or point.

Optionally, in block 330F, transmit the obtained data about any identified geographic region(s) of jamming and/or spoofing; such transmitted data includes (a) data describing (e.g., directly or indirectly identifying the boundaries) of the identified at least one geographic region of spoofing or jamming and (b) data indicating whether spoofing and/or jamming has been detected in each identified geographic region. Optionally, transmit the data about any identified geographic region(s) of jamming and/or spoofing in GIS format. Optionally, when the obtaining of data is periodically performed, then optionally the transmitting of the obtained data may also be periodically performed. Optionally, if the obtained data is requested by a requestor, e.g., an operations center processing system or a vehicle, then the obtained data is transmitted to the requestor.

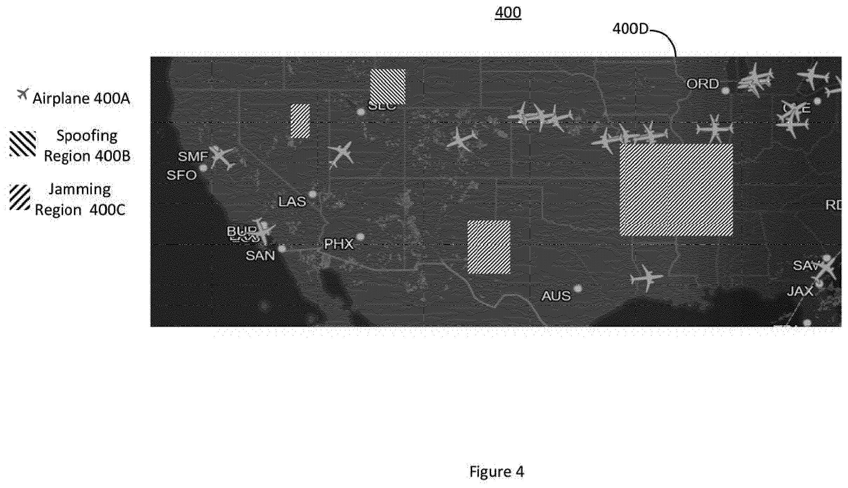

A processing system of an entity, e.g., of an operations center or a vehicle, may receive the transmitted data, and utilize it, e.g., to warn other entities of the identified geographic region(s) of spoofing and/or jamming. For example, an operations center processing center may communicate, to a vehicle, data that can be displayed, in the vehicle, on a geographic map illustrating the identified geographic regions of spoofing and/or jamming. Figure 4 illustrates a plan view of an exemplary embodiment of a geographic map 400D illustrating at least one geographic region of spoofing 400B and/or at least one geographic region of jamming 400C, e.g., displayed in a vehicle or in an operations center. Each region of spoofing and/or jamming may also illustrate a last time of detection of corresponding jamming or spoofing. The illustration may be an alpha-numeric or graphical representation of the last time or age of detection. The graphical representation may be implemented, e.g., by varying the color of the geographic region of jamming and/or spoofing. Optionally, the display 400 may illustrate the location of vehicle(s) 400A.

The processor systems (or processor circuitry), cloud computing systems (or cloud computing circuitry), and servers (server circuitry) disclosed herein may comprise state machines, neural network, and/or other types of computing systems. Such systems may comprise processing circuitry coupled to memory circuitry. The processing circuitry may include one or more microprocessors, microcontrollers, digital signal processing (DSP) elements, application-specific integrated circuits (ASICs), and/or field programmable gate arrays (FPGAs). The processor system may include or function with software programs, firmware, or other computer readable instructions, e.g., stored in the memory circuitry, for carrying out various process tasks, calculations, and control functions, used in the methods described herein. These instructions are typically tangibly embodied on any storage media (or computer readable medium) used for storage of computer readable instructions or data structures.

The memory circuitry can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, Blu-Ray discs, volatile or nonvolatile media such as Random Access Memory (RAM) (including, but not limited to, Dynamic Random Access Memory (DRAM)), Read Only Memory (ROM), Electrically Erasable Programmable ROM (EEPROM), and/or flash memory.

Methods of the invention can be implemented in computer readable instructions, such as program modules or applications, which may be stored in the computer readable medium and executed by the processing circuitry. Generally, program modules or applications include routines, programs, objects, data components, data structures, algorithms, and the like, which perform particular tasks or implement particular abstract data types.

Databases as used herein may be either conventional databases or data storage formats of any type, e.g., data files. Although separate databases are recited herein, one or more of such databases may be combined.

### Exemplary Embodiments

Example 1 includes a method, comprising: receiving data indicating (a) at least one of detected jamming and detected spoofing and (b) a corresponding geographic location and time of the at least one of detected jamming and detected spoofing; determining data describing a corresponding geographic region of the at least one of the detected jamming and the detected spoofing using the received data; and storing the determined data describing the corresponding geographic region, the corresponding time, and the data indicating at least one of detected jamming and detected spoofing.
Example 2 includes the method of Example 1, wherein determining data describing the corresponding geographic region of at least one of the detected jamming and the detected spoofing comprises determining data describing an area or a volume around the corresponding geographic location.
Example 3 includes the method of any of Examples 1-2, further comprising: obtaining data about at least one of: (a) at least one geographic region where the at least one of the detected jamming and the detected spoofing has been detected, and (b) at least one geographic region where at least one of previously detected jamming and previously detected spoofing is no longer detected; and transmitting the obtained data.
Example 4 includes the method of Example 3, further comprising receiving a request to identify at least one of: any geographic regions of jamming and any geographic regions of spoofing in a specific geographic region or including a geographic location; wherein the obtained data is transmitted to a requestor of the data.
Example 5 includes the method of any of Examples 3-4, wherein the obtained data is periodically obtained without receipt of a request for the obtained data, and the transmitted obtained data is periodically transmitted.
Example 6 includes the method of any of Examples 1-5, wherein the stored data is configured to be stored in a format configured to be illustrated on a geographic map.
Example 7 includes the method of any of Examples 1-6, wherein the received data is configured to be received from at least one of: at least one moving entity and at least one stationary entity.
Example 8 includes a program product comprising a non-transitory processor readable medium on which program instructions are embodied, wherein the program instructions are configured, when executed by at least one programmable processor, to cause the at least one programmable processor to: receive data indicating (a) at least one of detected jamming and detected spoofing and (b) a corresponding geographic location and time of the at least one of detected jamming and detected spoofing; determine data describing a corresponding geographic region of the at least one of the detected jamming and the detected spoofing using the received data; and store the determined data describing the corresponding geographic region, the corresponding time, and the data indicating at least one of detected jamming and detected spoofing.
Example 9 includes the program product of Example 8, wherein determining data describing the corresponding geographic region of at least one of the detected jamming and the detected spoofing comprises determining data describing an area or a volume around the corresponding geographic location.
Example 10 includes the program product of any of Examples 8-9, wherein the program instructions are configured, when executed by at least one programmable processor, to further cause the at least one programmable processor to: obtain data about at least one of:
   (a) at least one geographic region where the at least one of the detected jamming and the detected spoofing has been detected and (b) at least one geographic region where at least one of previously detected jamming and previously detected spoofing is no longer detected; and transmit the obtained data.
Example 11 includes the program product of Example 10, wherein the program instructions are configured, when executed by at least one programmable processor, to further cause the at least one programmable processor to receive a request to identify at least one of: any geographic regions of jamming and any geographic regions of spoofing in a specific geographic region or including a geographic location; wherein the obtained data is transmitted to a requestor of the data.
Example 12 includes the program product of any of Examples 10-11, wherein the obtained data is periodically obtained without receipt of a request for the obtained data, and the transmitted obtained data is periodically transmitted.
Example 13 includes the program product of any of Examples 8-12, wherein the stored data is configured to be stored in a format configured to be illustrated on a geographic map.
Example 14 includes the program product of any of Examples 8-13, wherein the received data is configured to be received from at least one of: at least one moving entity and at least one stationary entity.
Example 15 includes a system, comprising: a communications circuitry; and processing circuitry, communicatively coupled to the communications circuitry, and configured to: receive data indicating (a) at least one of detected jamming and detected spoofing and (b) a corresponding geographic location and time of the at least one of detected jamming and detected spoofing; determine data describing a corresponding geographic region of the at least one of the detected jamming and the detected spoofing using the received data; and store the determined data describing the corresponding geographic region, the corresponding time, and the data indicating at least one of detected jamming and detected spoofing.
Example 16 includes the system of Example 15, wherein determining data describing the corresponding geographic region of at least one of the detected jamming and the detected spoofing comprises determining data describing an area or a volume around the corresponding geographic location.
Example 17 includes the system of any of Examples 15-16, wherein the processing circuitry is further configured to obtain data about at least one of: (a) at least one geographic region where the at least one of the detected jamming and the detected spoofing has been detected and (b) at least one geographic region where previously detected jamming and previously detected spoofing is no longer detected; and transmit the obtained data.
Example 18 includes the system of Example 17, wherein processing circuitry is further configured to receive a request to identify at least one of: any geographic regions of jamming and any geographic regions of spoofing in a specific geographic region or including a geographic location; wherein the obtained data is transmitted to a requestor of the data.
Example 19 includes the system of any of Examples 17-18, wherein the obtained data is periodically obtained without receipt of a request for the obtained data, and the transmitted obtained data is periodically transmitted.
Example 20 includes the system of any of Examples 15-19, wherein the stored data is configured to be stored in a format configured to be illustrated on a geographic map.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method, comprising:
receiving data indicating (a) at least one of detected jamming and detected spoofing and (b) a corresponding geographic location and time of the at least one of detected jamming and detected spoofing;
determining data describing a corresponding geographic region of the at least one of the detected jamming and the detected spoofing using the received data; and
storing the determined data describing the corresponding geographic region, the corresponding time, and the data indicating at least one of detected jamming and detected spoofing.

2. The method of claim 1, wherein determining data describing the corresponding geographic region of at least one of the detected jamming and the detected spoofing comprises determining data describing an area or a volume around the corresponding geographic location.

3. The method of claim 1, further comprising:
obtaining data about at least one of: (a) at least one geographic region where the at least one of the detected jamming and the detected spoofing has been detected, and (b) at least one geographic region where at least one of previously detected jamming and previously detected spoofing is no longer detected; and
transmitting the obtained data.

4. The method of claim 3, wherein the obtained data is periodically obtained without receipt of a request for the obtained data, and the transmitted obtained data is periodically transmitted.

5. The method of claim 1, wherein the stored data is configured to be stored in a format configured to be illustrated on a geographic map.

6. A program product comprising a non-transitory processor readable medium on which program instructions are embodied, wherein the program instructions are configured, when executed by at least one programmable processor, to cause the at least one programmable processor to:
receive data indicating (a) at least one of detected jamming and detected spoofing and (b) a corresponding geographic location and time of the at least one of detected jamming and detected spoofing;
determine data describing a corresponding geographic region of the at least one of the detected jamming and the detected spoofing using the received data; and
store the determined data describing the corresponding geographic region, the corresponding time, and the data indicating at least one of detected jamming and detected spoofing.

7. The program product of claim 6, wherein determining data describing the corresponding geographic region of at least one of the detected jamming and the detected spoofing comprises determining data describing an area or a volume around the corresponding geographic location.

8. The program product of claim 6, wherein the program instructions are configured, when executed by at least one programmable processor, to further cause the at least one programmable processor to receive a request to identify at least one of: any geographic regions of jamming and any geographic regions of spoofing in a specific geographic region or including a geographic location;
wherein the obtained data is transmitted to a requestor of the data.

9. The program product of claim 8, wherein the obtained data is periodically obtained without receipt of a request for the obtained data, and the transmitted obtained data is periodically transmitted.

10. The program product of claim 6, wherein the stored data is configured to be stored in a format configured to be illustrated on a geographic map.
